(19) Europäisches Patentamt
European Patent Office
Office européen des brevets

(11) **EP 4 195 645 B1**

(12) **EUROPÄISCHE PATENTSCHRIFT**

(45) Veröffentlichungstag und Bekanntmachung des Hinweises auf die Patenterteilung:
**02.10.2024 Patentblatt 2024/40**

(21) Anmeldenummer: **21213370.6**

(22) Anmeldetag: **09.12.2021**

(51) Internationale Patentklassifikation (IPC):
**H04N 1/60** (2006.01)

(52) Gemeinsame Patentklassifikation (CPC):
**H04N 1/6036; H04N 1/6041**

(54) **VERFAHREN ZUR SPEKTRALEN FARBDICHTEMESSUNG IM FARBDRUCK**

METHOD FOR SPECTRAL INK DENSITY MEASUREMENT IN COLOUR PRINTING

PROCÉDÉ DE MESURE DE LA DENSITÉ SPECTRALE DE COULEUR DANS L'IMPRESSION COULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.06.2023 Patentblatt 2023/24**

(73) Patentinhaber: **Improve Process Analytics and Control GmbH**
**9524 Villach (AT)**

(72) Erfinder: **SALLINGER, Christian**
**9500 Villach (AT)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A2- 2 623 324    DE-A1- 102009 012 815
US-A1- 2002 104 457    US-A1- 2007 002 344

• "ISO 5-3:2009 Photography and graphic technology - Density measurements - Part 3: Spectral conditions = Photographie et technologie graphique - Mesurages de la densité - Partie 3: Conditions spectrales", ISO STANDARD,, vol. 5-3, 1 December 2009 (2009-12-01), pages 1 - 41, XP009536104

**Beschreibung**

Die Erfindung betrifft ein Verfahren zur spektralen Farbdichtemessung im Farbdruck.

Das genannte Verfahren betrifft den Bereich der Densitometrie im Allgemeinen und der Spektraldensitometrie im Speziellen.

Densitometrie ist eine Methode zur Kontrolle des Druckprozesses bezüglich Volltondichte und Tonwerten. Sie funktioniert zuverlässig für Schwarz-Weiß-Drucke und für Drucke mit den Prozessfarben Cyan (Blau), Magenta, Yellow (Gelb) und Key (Schwarz).

Bei der Auflichtdensitometrie wird die zu messende Druckfarbe von einer Lichtquelle beleuchtet. Der Lichtstrahl durchdringt die durchscheinende (lasierende) Farbschicht und wird dabei abgeschwächt. Der verbleibende Rest des Lichts wird von der Papierunterlage gestreut. Von diesem Streulicht durchläuft ein Teil nochmals die Farbschicht und wird weiter abgeschwächt. Der jetzt noch verbleibende Rest erreicht schließlich das Messgerät, welches das Licht in elektrische Energie umwandelt. Das Ergebnis der Auflichtdensitometrie wird in Dichteeinheiten angegeben.

Die Farbdichte einer Druckfarbe ist in erster Linie abhängig von der Pigmentart, ihrer Konzentration und der Farbschichtdicke. Für eine gegebene Druckfarbe ist die Farbdichte ein Maß für die Schichtdicke.

In der klassischen Densitometrie werden im Strahlengang Farbfilter verwendet, die auf das Absorptionsverhalten der Farben Cyan, Magenta und Yellow abgestimmt sind.

Sollen bedruckte Oberflächen direkt nach dem Druckvorgang gemessen werden, so ist die Druckfarbe noch nass und hat eine glänzende Oberfläche. Beim Trocknen dringt die Farbe in das Papier ein und verliert ihren Glanz. Dadurch ändert sich nicht nur der Farbton der Farbe, sondern auch der Farbdichtewert. Sollen das noch nasse Druckmedium densitometrisch mit den generell trockenen Sollwerten verglichen werden, so ist das nur eingeschränkt möglich.

Als Abhilfe werden zwei gekreuzte Linearpolarisationsfilter in den Strahlengang gesetzt. Polarisationsfilter lassen von den in allen Richtungen schwingenden Lichtwellen jeweils nur eine Schwingungsrichtung durch. Die durch den ersten Polarisationsfilter ausgerichteten Lichtstrahlen werden von der Farboberfläche teilweise spiegelnd reflektiert. Dabei ändert sich ihre Schwingungsrichtung nicht. Der zweite Polarisationsfilter ist gegenüber dem ersten um 90° gedreht angeordnet, so dass diese reflektierten Lichtwellen nicht durchgelassen werden.

Wenn Lichtstrahlen jedoch in die Farbschicht eindringen und von dort oder erst vom Bedruckstoff zurückgeworfen werden, verlieren sie ihre einheitliche Schwingungsausrichtung (Polarisation). Sie werden daher vom zweiten Polarisationsfilter teilweise durchgelassen und können gemessen werden. Durch das Abblocken der von der nassen Farbe reflektierten Glanzanteile des Lichts erreicht man also, dass die densitometrischen Messwerte an nassen und trockenen Farben annähernd gleich sind.

Densitometer zeigen als Messergebnis die Farbdichte D an. Sie ist das logarithmische Verhältnis aus der Lichtreflexion durch ein Vergleichsweiß und der Lichtreflexion der Farbschicht. Der Farbdichtewert errechnet sich nach der Formel $D = \log 1/\beta$. Der Reflexionsgrad $\beta$ stellt dabei das Verhältnis LeP / LeW dar. Dabei ist LeP die Reflektanz der gemessenen Druckfarbe und LeW die Reflektanz des Referenzweiß. Somit kann D auch als log LeW/LeP dargestellt werden.

Der Reflexionsgrad ß gibt also das Verhältnis zwischen den Lichtreflexionen einer zu messenden Probe (Druckfarbe) und einem Weiß (Referenzwert) an. Der Reflexionsgrad $\beta$ wird häufig auch als Reflektanzfaktor $P_\lambda$ bezeichnet.

Beim klassischen Densitometer werden mit Hilfe von Farbfiltern die einzelnen Druckfarben Cyan, Magenta und Yellow vermessen, so dass für jede der Farben ein eigener Messvorgang notwendig ist.

Die Spektraldensitometrie bedient sich des Messprinzips der Erfassung der spektralen Reflektanz, aus dem sich alle anderen farbmetrischen und densitometrischen Größen berechnen lassen.

Der Sensor des Spektraldensitometers ist für große Teile, insbesondere für den kompletten sichtbaren Bereich des elektromagnetischen Spektrums, also alle Wellenlängen des sichtbaren Lichts empfindlich. Der Empfindlichkeitsbereich beginnt etwa bei ungefähr 380 nm im Violett und reicht über die Farbnuancen Blaugrün, Grün und Gelb bis zum Rot bei ungefähr 730 nm.

Die spektralen Reflektanzwerte werden für alle Wellenlängenabschnitte (Banden) gleichzeitig mittels eines Polychromators oder auch Spektralmesskopf gemessen. Die Banden decken jeweils Wellenlängenbereiche mit einer vorgegebenen Breite ab. Beispielsweise sind Polychromatoren bekannt, die Banden mit einer Breite zwischen 10 und 50 nm auflösen können. Das Auffächern des Lichtes erfolgt dabei durch ein Beugungsgitter, ein Prisma oder durch viele Schmalbandfilter. Jedenfalls wird der gemessene Lichtstrom in seine spektralen Anteile aufgeteilt, deren Signalstärken gemessen und in ihrer Gesamtheit als Spektralwertkurve ausgegeben werden.

Bei der spektralen Messung werden also im Unterschied zu klassischen Densitometern die spektralen Farbinformationen bei der Berechnung der Farbschichten herangezogen. Zudem können aus den spektralen Messwerten die Farbdichten für Cyan, Magenta, Yellow und auch für anderen Farben bestimmt werden, ohne dass separate Messungen mit unterschiedlichen Farbfiltern notwendig sind.

Bei den Spektraldensitometern tasten photoempfindliche Sensoren zur Bestimmung des spektralen Reflektanzwerte bei der Bestimmung der densitometrischen Größen den gesamten sichtbaren Bereich des elektromagnetischen Spektrums ab. Dabei können sowohl physikalische Filter in den Strahlengang eingeschwenkt als auch virtuelle, das heißt mathematisch simulierte Filter gesetzt werden. Zusätzlich verlangt die standardkonforme Dichtemessung die oben erwähnte Verwendung eines Polarisationsfilters, der die Glanzunterschiede zwischen noch nassen und bereits getrockneten Druckfarbenschichten unterdrückt. Auf diese Weise werden unabhängig von der Zeitnähe zum Druckvorgang die Messungen vergleichbar gemacht.

Die Anwendung von mathematisch simulierten Filtern ist in den Normen ISO 13655 Kapitel 5 sowie ISO 5.3 Kapitel 4.5.2 zusammen mit Annex B definiert. Aus der gemessenen Reflektanz und durch Faltung mit der Filterfunktion für verschiedene Grundfarben wie Cyan, Magenta und Yellow, ergeben sich Werte der Farbdichten für die Tristimulus-Werte X, Y, und Z, bevorzugt im CIE-Normsystem.

In der Praxis werden Handmessgeräte für Einzelmessung, handgeführte Scangeräte zum manuellen Erfassen von in einer Linie angeordneten Messfeldern und elektromotorisch angetriebene Scanmessgeräte als Scan-Spektraldensitometer eingesetzt. Zudem sind Inline-Messsysteme bekannt, die in einem Drucksystem angeordnet sind und nacheinander gedruckte Messfelder vermessen. Diese Geräte haben dabei die Gemeinsamkeit, dass jeweils an einem Ort auf dem zu vermessenden Druckbild das Remissionsspektrum mit einer Optik und einer Sensoranordnung spektral erfasst wird. Die Abmessungen der erfassten, bevorzugt runden Fläche liegen in der Größenordnung von 1 bis 10 mm.

Die auf dem Druckmedium aufgedruckten Farb-Messfelder sind in der Regel rechteckig oder quadratisch. Dabei werden Farbverläufe für jeweils eine der Grundfarben des Druckers in Abstufungen von Bedruckung zu 100% bis 0 % in Stufen von beispielsweise 10% aufgedruckt, deren Farbdichten dann mit einem der beschriebenen Messgeräte spektral bestimmt werden. Die Fläche jedes Farb-Messfeldes wird dabei von der Optik des Messgerätes nicht vollständig erfasst, da die on der Optik beobachtete Fläche in der Regel rund ist. Somit werden die Ecken der Messfelder nicht erfasst. Zudem wird dabei nur ein Wert für die Farbdichte für die gemessene Fläche bestimmt.

Aus dem Stand der Technik sind weiterhin Farbmessungssystem (ACMS™ - Advanced Colour Measurement System) und ein Inline Farbmessungssystem (ICMS™- Inline Colour Measurement System) der Firma ipac bekannt, die zur Farbbeurteilung mehrfärbiger Oberflächen eingesetzt werden. Das System weist jeweils einen spektralen, gegebenenfalls inline angeordneten Scanner auf, der für verschiedene Substrate, also Druckmedien bzw. Materialien (Papier, Folie, Holz, Kunststoff, Keramik, Mineralstoff) und verschiedene Druckverfahren (Digitaldruck, insbesondere Tintenstrahldruck oder Laserdruck, sowie Tiefdruck, Flexodruck, Offsetdruck oder Siebdruck) eingesetzt werden kann. Das ICMS™ und das ACMS™ nutzen eine spektrale ortsaufgelöste Scantechnologie zur Messung eines Druckbildes.

Das spektrale Messsystem ist beispielsweise eine multispektrale Kamera mit einer Mehrzahl von Wellenlängenbändern, vorzugsweise mit 36 Wellenlängenbändern pro aufgenommenem Bildpunkt, die pro Wellenlängenband eine Farbinformation erzeugt. Somit entsteht pro aufgenommenem Bildpunkt (Pixel) ein Farbspektrum aus den Wellenlängenbändern. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können.

Das spektrale Messsystem kann auch eine hyperspektrale Kamera sein, bei der pro Bildpunkt mittels einer optischen Einrichtung, beispielsweise mittels eines Prismas, das Licht spektral aufgespalten und somit einzelne spektrale Bereiche separat gemessen werden. Dadurch erhöht sich die spektrale Auflösung gegenüber einer multispektralen Kamera auf beispielsweise bis zu 350 oder mehr Wellenlängenbänder.

Im Gegensatz zu einer herkömmlichen RGB-Kamera wird somit pro Bildpunkt nicht nur eine Farbe, sondern eine spektrale Verteilung mit erheblich mehr Informationstiefe gewonnen. Ein Vergleich von Bildinformationen aus verschiedenen spektralen Aufnahmen wird dann mittels Software durchgeführt.

Weiterhin kann eine Auflösung des Scanners von mindestens 32 dpi, bevorzugt von mindestens 72 dpi, besonders bevorzugt von mindestens 90 dpi erreicht werden.

Die DE 10 2009 012 815 A1 offenbart eine Messvorrichtung mit beweglicher Messeinrichtung in einer Druckmaschine, wobei als Messeinrichtung ein Spektralscanner mit einer Auflösung von 100 oder 200 dpi genannt wird. Der Spektralscanner wird für eine Farbmessung und Farbkalibrierung eingesetzt.

Die US 2007/0002344 A1 beschreibt ein Kalibrierungssystem für einen Drucker, bei dem eine Farbdichtemesseinheit entweder in Form eines Spektrometers oder eines RGB-Scanners eingesetzt wird.

Die US 2002/0104457 A1 offenbart eine spektrale Messung mit einem herkömmlichen Spektrometer, mit dem der Druck an vorgegebenen Stellen gemessen wird, wobei der spektrale Reflektanzfaktor bestimmt wird.

Daher liegt der vorliegenden Erfindung die Aufgabe zugrunde, die spektrale Farbdichtemessung im Farbdruck zu verbessern.

Die zuvor aufgeführte Aufgabe wird erfindungsgemäß durch die Merkmale des Anspruchs 1 gelöst.

Das Verfahren zur spektralen Farbdichtemessung im Farbdruck weist die folgenden Schritte auf:
Zunächst wird für ein unbedrucktes Substrat mit einem ortsaufgelösten spektralen Messsystem, vorzugsweise an einer Vielzahl von Messpunkten, eine spektral aufgelöste Referenzreflektanz gemessen. Diese Reflektanz wird zur Normierung der später zu messenden Reflektanzen benötigt. Die Referenzmessung kann dabei vor einem Bedrucken des Substrates und gegebenenfalls fortlaufend während des Druckvorgangs durchgeführt werden. Dazu müssen im Druckprozess an vorgegebenen Positionen unbedruckte Abschnitte des Substrates freigelassen werden. Als Substrat werden beispielsweise Druckmedien bzw. Materialien in Form von Papier, Folie, Holz, Kunststoff, Keramik, Mineralstoff oder anderen Materialien eingesetzt.

Mit einem Farbdrucker wird mindestens ein Farb-Messfeld, vorzugsweise eine Mehrzahl von Farb-Messfeldern, mit mindestens einer Druckfarbe bedruckt.

Unter einer Druckfarbe wird allgemein ein farbmittelhaltiges Gemisch verstanden, das mit Hilfe eines Druckers auf einem Substrat wie Papier oder Kunststoff übertragen wird. Insbesondere bei digitalen Farbdruckern werden drei Druckfarben Cyan, Magenta und Yellow und gegebenenfalls Schwarz (Key) eingesetzt. Daneben können auch zusätzlich oder alternativ weitere bzw. andere Druckfarben mit anderen Pigmentzusammensetzungen verwendet werden.

Als Farbdruckverfahren kommen verschiedene Techniken in Frage, beispielsweise Digitaldruck, insbesondere Tintenstrahldruck oder Laserdruck, sowie Tiefdruck, Flexodruck, Offsetdruck oder Siebdruck. Im Fall von Tintenstrahldruckern sind die Druckfarben als Tinten, bei Laserdruckern als Toner ausgestaltet. Bei sonstigen Farbdruckern kommen als Druckfarben unterschiedliche Druckfarbenformulierungen auf Basis von Wasser, Ölen oder Lösungsmitteln zum Einsatz.

Für die Durchführung des Verfahrens reicht ein Farb-Messfeld einer Druckfarbe aus, jedoch werden üblicher Weise für jede der Druckfarben sogenannte Farbkeile gedruckt, die für jede Druckfarbe eine Mehrzahl von in ihrer Farbdichte abgestuften Farb-Messfelder aufweisen. Dabei sind Abstufungen in 10%-, 5%- oder 1%-Schritten gebräuchlich, wobei üblicher Weise auch Farb-Messfelder mit Tonwerten von 100% und von 0% enthalten sind. Das Farbfeld mit Tonwert von 0% kann dabei für die Messung der spektral aufgelösten Referenzreflektanz des unbedruckten Substrates verwendet werden.

Anschließend wird die spektral aufgelöste Reflektanz für mindestens ein Farb-Messfeld mit dem ortsaufgelösten spektralen Messsystem an einer Vielzahl von Messpunkten gemessen. Somit werden verteilt über zumindest eine Teilfläche des Farb-Messfeldes, vorzugsweise über das gesamte Farb-Messfeld spektral aufgelöste Farbmessungen durchgeführt.

Das Messsystem weist dabei wahlweise einen Zeilensensor oder einen zweidimensionalen Sensor einer hyperspektralen Kamera auf. Jedenfalls weist der Sensor eine Vielzahl von Bildpunkten auf, für die jeweils ein Spektrum erfasst wird. Somit werden ausreichend hohe Auflösungen erreicht, um die verschiedenen Farb-Messfelder an einer Mehrzahl von Messpunkten zu vermessen. Dadurch erreicht man eine spektrale Auflösung von vorzugsweise 36 oder von bis zu 350 oder mehr Wellenlängenbändern. Pro Wellenlängenband wird dann eine Auflösung im Bereich von 10 nm, insbesondere im Bereich von 1 bis 30 nm, erreicht. Damit wird das sichtbare Spektrum des Lichts zwischen 380 und 730 nm abgedeckt.

Für jeden Messpunkt wird aus der spektralen Verteilung der gemessenen Reflektanz, der gemessenen Referenzreflektanz und einer die Druckfarbe repräsentierenden spektralen Gewichtsfunktion eine Farbdichte für die Druckfarbe berechnet. Dabei wird bevorzugt nach den Normen ISO 13655 Kapitel 5 sowie ISO 5.3 Kapitel 4.5.2 zusammen mit Annex B vorgegangen.

Beispielsweise wird in ISO 5.3 Annex B definiert, dass abhängig von der Breite der spektralen Kanäle für eine Breite bzw. für ein Intervall von 1 nm die Berechnung nach Gleichung B.1 in Annex B.3 und für Kanalbreiten bzw. Intervalle von 10 oder 20 nm die Berechnung nach Gleichung B.2 durchgeführt wird. Gemeinsam ist den Berechnungen, dass für die Wellenlängen-abhängigen Kanäle jeweils die spektrale Reflektanz mit der Gewichtsfunktion multipliziert wird, durch einen Normierungsfaktor geteilt wird und über alle Wellenlängen aufsummiert wird.

Somit ergibt sich aus jeder gemessenen spektralen Reflektanz für jeden Messpunkt innerhalb jedes Farb-Messfeld ein Wert für die Farbdichte.

Darüber hinaus kann das Messsystem als Inline-Messgerät im Bereich des Druckers angeordnet sein oder als Offline-Gerät zur nachträglichen Vermessung der bedruckten Oberfläche eingesetzt werden.

In erfindungsgemäßer Weise ist das Farbmesssystem so ausgerichtet und wird derart relativ zum mindestens einen Farb-Messfeld bewegt, so dass das mindestens eine Farb-Messfeld rasterförmig an einer Vielzahl von Messpunkten mit einer Auflösung von mindestens 30 dpi, vorzugsweise von mindestens 70, insbesondere von mindestens 90 dpi vermessen wird. Eine obere Grenze liegt beispielsweise im Bereich von 250 dpi. Insbesondere ist der Zeilensensor oder der zweidimensionale Sensor senkrecht zur Bewegungsrichtung relativ zum bedruckten Substrat ausgerichtet, so dass das entstehende Vermessungsraster in einer Ausrichtung in Bewegungsrichtung verläuft. Eine Traversierung, bei gleichzeitiger 90 ° Rotation des Farbmesssystems, quer zur eigentlichen Bewegungsrichtung ist gleichermaßen zulässig.

Des Weiteren ist das Verfahren so ausgestaltet, dass die Fläche des mindestens einen Farb-Messfelds zu mindestens 80%, vorzugsweise zu mindestens 90%, insbesondere zu mindestens 95% vermessen wird. Dadurch wird das Farb-Messfeld nahezu vollständig, insbesondere vollständig, vermessen und die ermittelten Farbdichten ermöglichen eine genauere Analyse der Farbdichteverteilung, also des Druckergebnisses über die Fläche des Farb-Messfeldes.

Bevorzugt werden die Farbdichten für mindestens zwei Messpunkte, vorzugsweise eine Mehrzahl von Messpunkten und insbesondere für alle Messpunkte jedes Farb-Messfeldes gemittelt. Die Vielzahl von Messpunkten erlaubt somit eine genaue und zugleich variable Bewertung des Farb-Messfeldes.

In weiter bevorzugter Weise wird bei Anwendung eines Tintenstrahldruckers jedem Messpunkt der rasterförmigen spektralen Farbdichtemessung des mindestens einen Farb-Messfeldes eine Gruppe von Farbdüsen (Nozzles) eines Druckkopfes zugeordnet. Die Gruppe von Farbdüsen weist höchstens 10 Farbdüsen, vorzugsweise höchstens 5 Farbdüsen, insbesondere eine Farbdüse auf. Somit ist je nach der flächigen Auflösung des Druckes und je nach der räumlichen Auflösung des Messsystems eine Analyse bis hin zu wenigen Farbdüsen bzw. im Grenzfall auch bis zu einzelnen Farbdüsen möglich. Ein Druckkopf hat typischerweise eine Breite von 40-50mm und der Farbdrucker weist dann eine Mehrzahl von Druckköpfen auf, die eine gesamte Druckbreite von ca. 1000 mm realisieren.

Das zuvor beschriebene Verfahren mit seinen verschiedenen Ausgestaltungen ist für Singlepass-Druck oder für Multipass-Druck einsetzbar.

Das Verfahren wird mit einer vorgegebenen Beleuchtung der zu bedruckenden bzw. der bedruckten Oberfläche durchgeführt. Die Wahl der Beleuchtung folgt den Anforderungen der ISO Norm 13655 im Besonderen der Messbedingung M3. Vorzugsweise wird die genormte Beleuchtungsart D50 verwendet.

Ebenso können im Strahlengang Polarisationsfilter angeordnet sein, um auch noch nasse Druckbilder vermessen zu können.

Im Folgenden wird die Erfindung anhand von Ausführungsbeispielen mit Bezug auf die Zeichnung erläutert. In der Zeichnung zeigen

Fig. 1    eine erste Anlage zur Durchführung eines erfindungsgemäßen Verfahrens,

Fig. 2    eine zweite Anlage zur Durchführung eines erfindungsgemäßen Verfahrens,

Fig. 3    eine dritte Anlage zur Durchführung eines erfindungsgemäßen Verfahrens,

Fig. 4    ein Ausführungsbeispiel eines spektralen Messsystems zur Durchführung eines erfindungsgemäßen Verfahrens,

Fig. 5    ein Ausführungsbeispiel eines bedruckten Substrates mit einem gedruckten Farbkeil mit einer Mehrzahl von Farb-Messfeldern und einer schematischen Darstellung der Abdeckung der Farb-Messfelder durch die spektrale Messung nach der vorliegenden Erfindung (a) und nach dem Stand der Technik (b),

Fig. 6    ein Ausführungsbeispiel zur anschaulichen Darstellung der Berechnung des spektralen Reflektanzfaktors ($R_\lambda$) aus der spektralen Reflektanz des Farb-Messfeldes am Beispiel Cyan und der spektralen Reflektanz des unbedruckten Substrates und

Fig. 7    ein Ausführungsbeispiel zur anschaulichen Darstellung der Berechnung der Farbdichte D aus den spektralen Reflektanzfaktors ($R_\lambda$) und dem Gewichtsfaktor ($W_\lambda$).

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

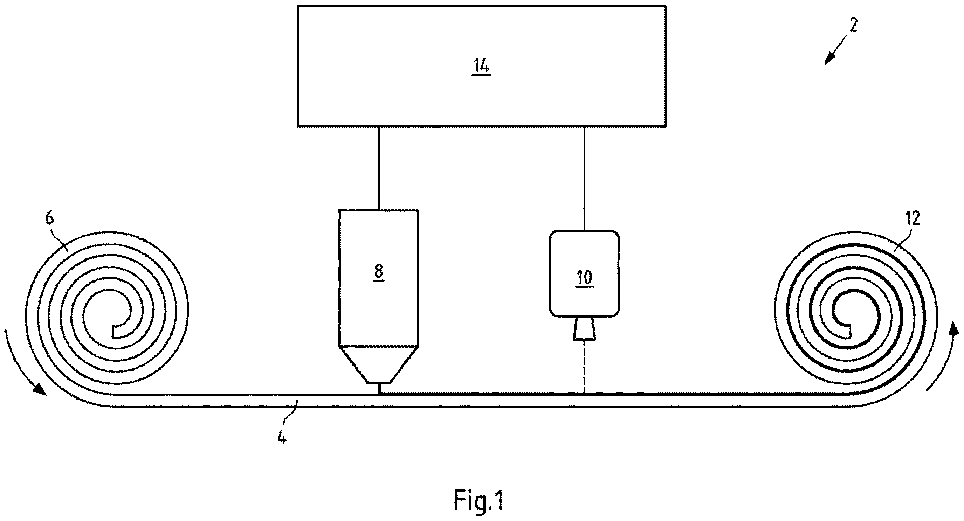

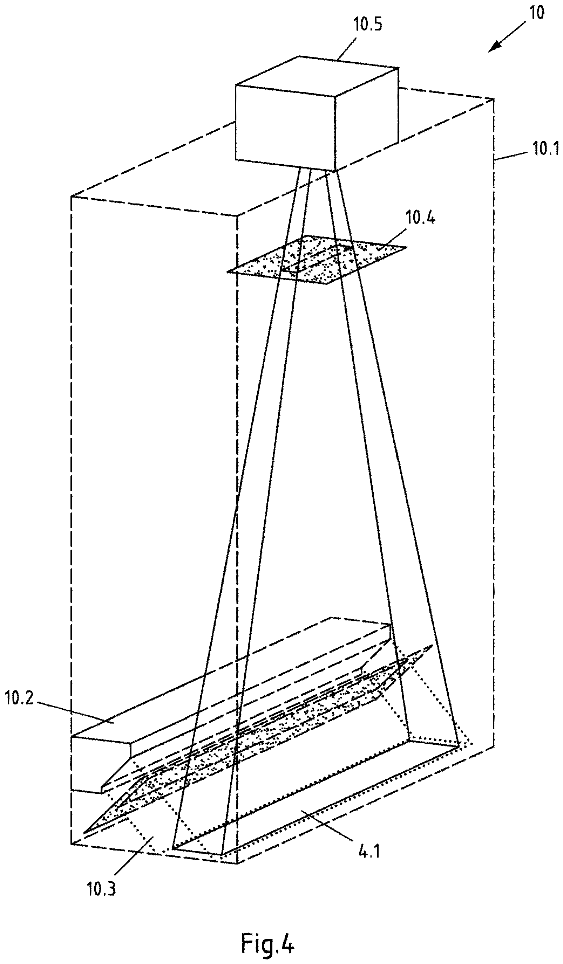

Fig. 1 zeigt schematisch eine erste Anlage 2 zur Durchführung des Verfahrens zur spektralen Farbdichtemessung im Farbdruck. Zunächst wird das Trägermaterial 4 von einer ersten Rolle 6 abgerollt, unterhalb des Farbdruckers 8 und des spektralen Messsystems 10 geführt und dann wieder auf einer Rolle 12 aufgerollt. Insoweit kann man von einem endlosen Trägermaterial 4 sprechen, mit dem das kontinuierliche Drucken und Farbdichtemessen durchgeführt wird. Dabei ist selbstverständlich, dass das endlose Band eine endliche, aber große Länge aufweist. Das spektrale Messsystem ist vereinfacht dargestellt und wird am Beispiel der Fig. 4 näher erläutert.

Der Farbdrucker 8 ist vorliegend als digitaler Tintenstrahldrucker ausgebildet, mit dem die Oberfläche des Substrates in dem dargestellten Inline-Prozess bedruckt wird. Bei dieser Anwendung sind Tintenstrahldrucker bevorzugt, jedoch ist die Erfindung nicht auf die Anwendung von Tintenstrahldruckern beschränkt.

Die Ergebnisse der spektralen Messungen durch das spektrale Messsystem werden einer Steuerungseinrichtung 14 übertragen, die die aufgenommenen spektralen Daten auswertet.

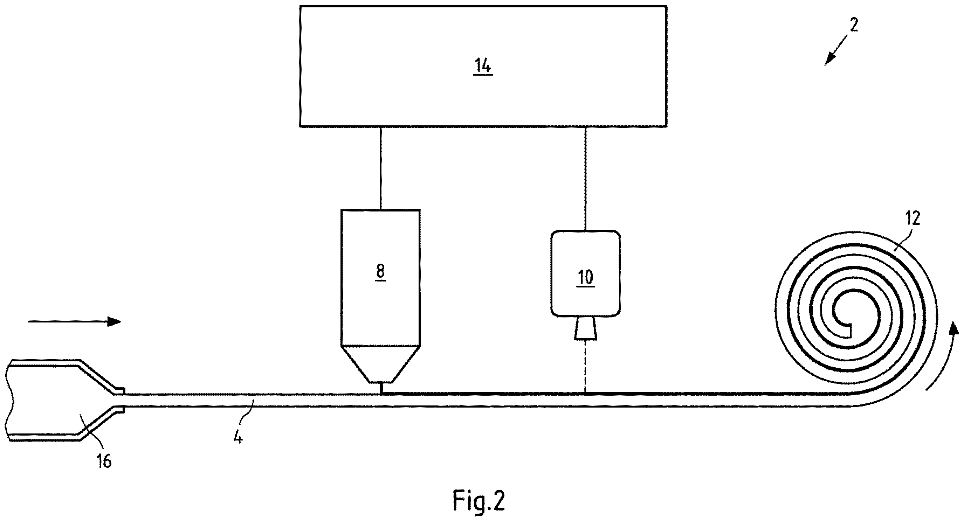

Fig. 2 zeigt schematisch eine zweite Anlage 2 zur Durchführung des Verfahrens zur spektralen Farbdichtemessung im Farbdruck. Im Vergleich zur Anlage nach Fig. 1 wird das Trägermaterial 4 nicht von einer Rolle abgewickelt, sondern durch einen Extrusionsprozess hergestellt. Dazu ist schematisch ein Extrusionswerkzeug 16 dargestellt, aus dem ein Strang zur Herstellung beispielsweise eines Kantenmaterials für die Anwendung bei Möbelplatten extrudiert wird. Grundsätzlich notwendige Kalander und Abkühlstationen sind hier der Einfachheit wegen nicht dargestellt. Anstelle des Extrusionswerkzeugs 16 kann auch eine Stranggussvorrichtung eingesetzt werden, um einen kontinuierlichen Strang an Trägermaterial zu erzeugen.

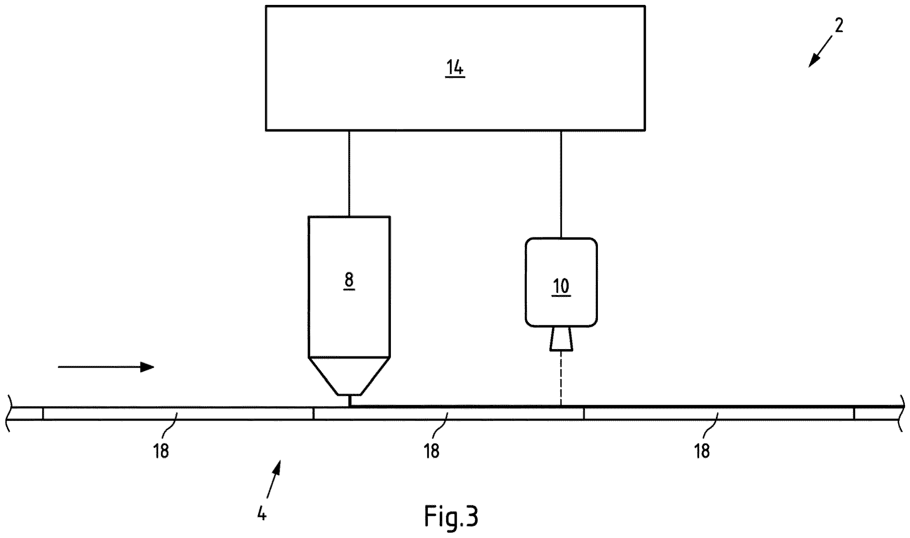

Fig. 3 zeigt schematisch eine dritte Anlage 2 zur Durchführung des Verfahrens zur spektralen Farbdichtemessung im Farbdruck. Im Vergleich zu den Anlagen nach den Fig. 2 und 3 ist das Trägermaterial 4 nicht als endloses Material ausgebildet, sondern besteht aus einer Vielzahl von aneinander anstoßenden Elementen 18, beispielsweise Platten oder Blättern. Das Trägermaterial 4 besteht also aus einzelnen Elementen 18, die vor und nach dem Bedrucken separat vorliegen. Das kontinuierliche Drucken und Messen von Farbcharts erfolgt dann auf dem aus einzelnen Elementen 18 zusammengesetzten Trägermaterial 4.

Fig. 4 zeigt ein Ausführungsbeispiel eines spektralen Messsystems 10 zur Durchführung eines erfindungsgemäßen Verfahrens. Das Messsystem 10 weist zunächst ein Gehäuse 10.1 auf, in dem die Komponenten angeordnet sind. Im Gehäuse 10.1 ist eine Beleuchtungseinrichtung 10.2 angeordnet, die einen Scanbereich 4.1 auf der Oberfläche des Trägermaterials 4 beleuchtet. Dabei wird Licht einer genormten Beleuchtungsart, beispielsweise D50, mit einer vorgegebenen spektralen Intensitätsverteilung über den sichtbaren spektralen Bereich von 380 bis 730 nm erzeugt.

Im Strahlengang vor dem Scanbereich ist ein erster Polarisationsfilter 10.3 angeordnet, der das eintreffende Licht polarisiert, bevor es auf dem Scanbereich 4.1 auftrifft. Das vom Scanbereich 4.1 reflektierte Licht verläuft dann in Richtung eines zweiten Polarisationsfilters 10.4. Der erste Polarisationsfilter 10.3 lässt von den in allen Richtungen schwingenden Lichtwellen jeweils nur eine Schwingungsrichtung durch. Die durch den ersten Polarisationsfilter 10.3 ausgerichteten Lichtstrahlen werden von der Farboberfläche im Scanbereich 4.1 teilweise spiegelnd reflektiert, insbesondere wenn die Oberfläche durch einen kurz zuvor erfolgten Druckprozess noch nass ist, jedenfalls noch nicht ausgetrocknet ist. Bei einer spiegelnden Reflexion ändert sich Schwingungsrichtung des Lichtes nicht. Der zweite Polarisationsfilter 10.4 ist gegenüber dem ersten Polarisationsfilter um 90° gedreht angeordnet, so dass die vom Scanbereich 4.1 reflektierten Lichtwellen nicht durchgelassen werden.

Bei einer spektralen Messung von abgetrockneten Farbdrucken können die beschriebenen Polarisationsfilter auch weggelassen werden.

Im Strahlengang hinter dem zweiten Polarisationsfilter 10.4 ist die Mess- und Auswerteeinrichtung 10.5 angeordnet. Darin befindet sich eine multispektrale oder hyperspektrale Kamera, mit der für jeden erfassten Bildpunkt des Scanbereichs 4.1 vorzugsweise in 36 Wellenlängenbändern pro aufgenommenem Bildpunkt eine spektrale Intensitätsverteilung gemessen wird. Somit wird pro Wellenlängenband eine Farbinformation erzeugt, die zusammen ein Spektrum ergeben. Somit entsteht pro aufgenommenem Bildpunkt (Pixel) ein Farbspektrum aus vorzugsweise 36 Wellenlängenbändern. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können.

Das spektrale Messsystem kann auch eine hyperspektrale Kamera aufweisen, die eine gegenüber einer multispektralen Kamera vergrößerte spektrale Auflösung von beispielsweise bis zu 350 oder mehr Wellenlängenbänder pro Messpunkt aufweist.

Die spektralen Informationen werden dann bevorzugt innerhalb des spektralen Messsystems mit einer Datenverarbeitung ausgewertet.

Das erfindungsgemäße Verfahren zur spektralen Farbdichtemessung im Farbdruck kann dann mit einer in den Fig. 1 bis 4 dargestellten Anlage 2 mit spektralem Messsystem 10 wie folgt durchgeführt werden.

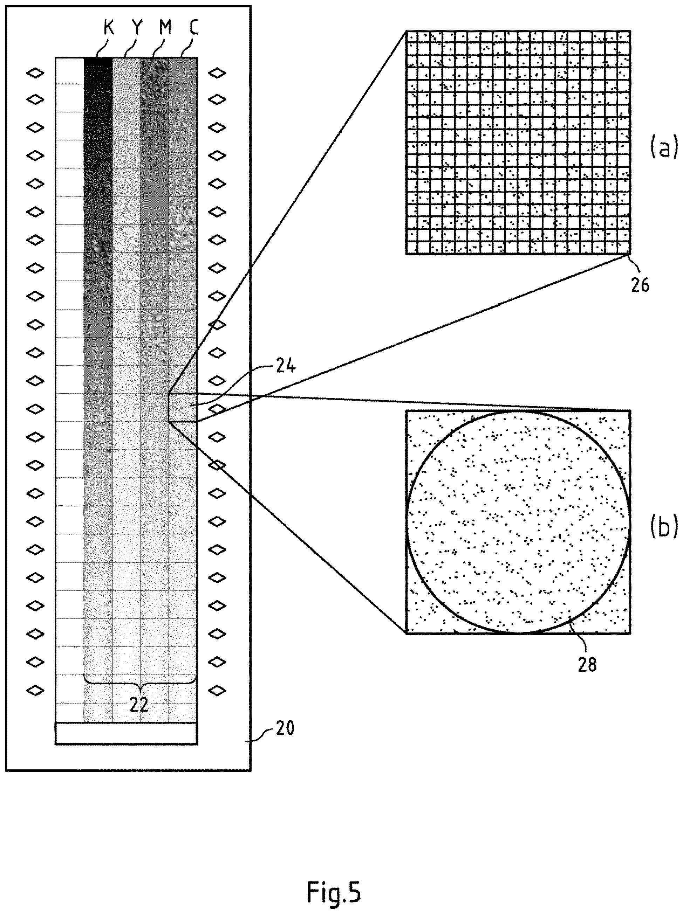

Zunächst wird für ein noch unbedrucktes Substrat 4 mit dem ortsaufgelösten spektralen Messsystem 10 an einer Vielzahl von Messpunkten eine spektral aufgelöste Referenzreflektanz gemessen. Dazu wird der Farbdrucker so angesteuert, dass vorgegebene Abschnitte der Oberfläche des Substrates 4 unbedruckt bleiben. Dieses kann bei einem Inline-Prozess am Beginn des Druckes oder in vorgegebenen Abständen während des Druckprozesses erfolgen. Wie anhand der Fig. 5 erläutert wird, sind bei Farbkeilen regelmäßig auch unbedruckte Flächen vorhanden, die ebenfalls für die Messung der Referenzreflektanz genutzt werden können. Die gemessenen spektralen Referenzreflektanzen werden für eine spätere wiederkehrende Normierung bei der Bestimmung der Farbdichte D gespeichert.

Anschließend wird mit dem Farbdrucker 8 eine Mehrzahl von Farb-Messfeldern mit jeweils einer Druckfarbe gedruckt.

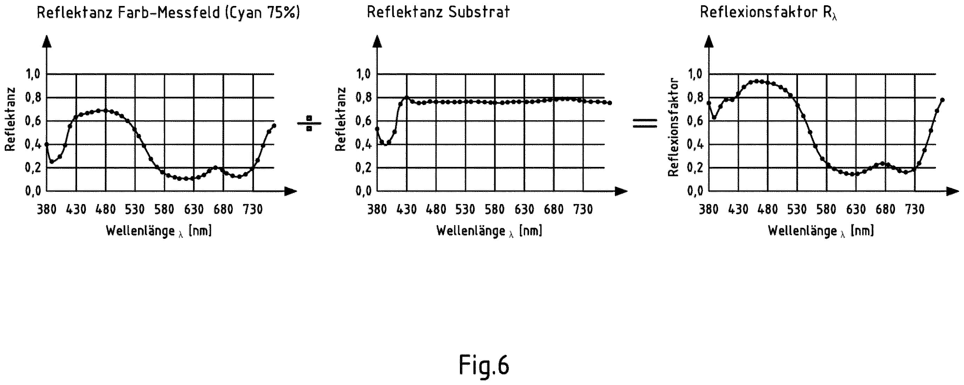

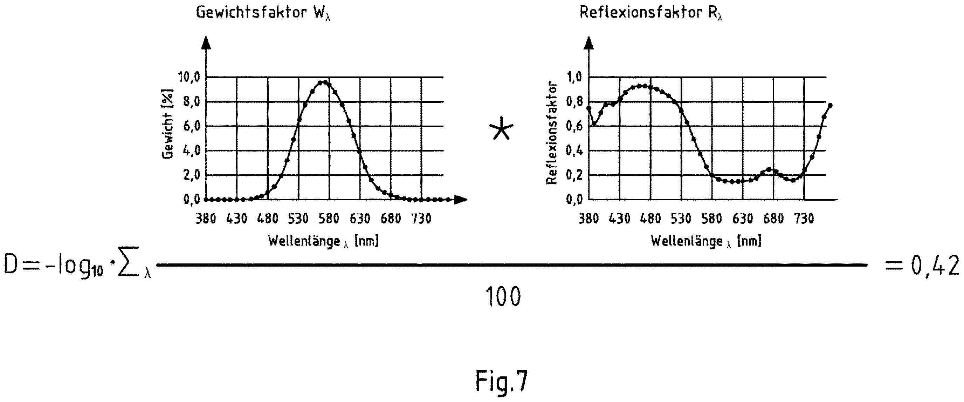

Mit dem spektralen Messsystem 10 werden spektral aufgelöste Reflektanzen für die Farb-Messfelder an einer Vielzahl von Messpunkten gemessen und für jeden Messpunkt wird aus der spektralen Verteilung der gemessenen Reflektanz, der gemessenen Referenzreflektanz und einer die Druckfarbe repräsentierenden spektralen Gewichtsfunktion eine Farbdichte für die Druckfarbe berechnet. Diese Verfahrensschritte werden anhand der Fig. 6 und 7 näher erläutert.

Fig. 5 zeigt schematisch einen Ausschnitt eines Substrats 20, das durch eines der zuvor beschriebenen Trägermaterialien 4 gebildet wird. Im dargestellten Ausschnitt sind für die vier Druckfarben Schwarz (Key -K), Yellow (Y), Magenta (M) und Cyan (C) Farbkeile, insgesamt mit 22 gekennzeichnet, als eine Abfolge von Farb-Messfeldern 24 aufgedruckt worden, deren Bedruckung mit der jeweiligen Druckfarbe in der Darstellung nach Fig. 5 von oben nach unten von 100% bis 0% in gleichen Schritten abnimmt. Die Farb-Messfelder werden dann durch das nachfolgend beschriebene Verfahren spektral vermessen und aus den Messwerten die Farbdichte bestimmt.

Wie Fig. 5 zeigt, verläuft der zeitliche Druckablauf dabei von oben nach unten, ebenso auch die nachfolgende Messung. Bei der Messung wird die spektral aufgelöste Reflektanz für die Farb-Messfelder 24 mit dem ortsaufgelösten spektralen Messsystem 10 an einer Vielzahl von Messpunkten 26 innerhalb jedes der Farb-Messfelder 24 gemessen, wie in Fig. 5 (a) mit einem Strichraster gezeigt ist.

Durch die Vielzahl von Messpunkten ist ein Abtasten nahezu der gesamten Fläche des Farb-Mesfeldes 24 möglich, so dass eine detaillierte Auswertung der aus den Reflektanz-Messkurven erfolgen kann.

Die Fig. 6 und 7 zeigen in einer graphisch aufbereiteten Weise die Anwendung der Berechnung der Farbdichte für ein Farbmessfeld der Grundfarbe Cyan nach der Norm ISO 5.3 gemäß Anlage B und insbesondere gemäß Anlage B.4. Hier wird für Wellenlängenintervalle der Wellenlängenbänder von 10nm oder 20nm spezifiziert, wie die Berechnung der Standard Farbdichte nach der Gleichung B.2 erfolgt:

$$D = -\log\left(\sum_\lambda \frac{W_\lambda \times R_\lambda}{100}\right)$$

wobei $W_\lambda$ der spektrale Gewichtsfaktor der Wellenlänge $\lambda$, $R_\lambda$ der spektrale Reflektanzfaktor der Wellenlänge $\lambda$ und 100 die Summe der spektralen Gewichtsfaktoren über den Wellenlängenbereich von 380 nm bis 730 nm ist.

Fig. 6 zeigt zunächst die Berechnung der spektralen Verteilung des Reflektanzfaktors $R_\lambda$ als Quotient aus der spektralen Verteilung der Reflektanz des Farb-Messfeldes und aus der spektralen Verteilung der Reflektanz des unbedruckten Substrates. Dabei werden anstelle der mathematischen Ausdrücke entsprechende Spektren dargestellt. Für gleiche Werte der Wellenlänge $\lambda$ werden dann jeweils die entsprechenden Werte durcheinander geteilt. Als Ergebnis wird eine von der Wellenlänge $\lambda$ abhängige spektrale Verteilung des Reflektanzfaktors $R_\lambda$ berechnet.

Fig. 7 zeigt dann in gleichermaßen anschaulicher Weise, wie die Farbdichte D als negativer Logarithmus zur Basis 10 der Summe über alle Wellenlängen $\lambda$ über die Produkte aus der spektralen Verteilung des Gewichtsfaktors $W_\lambda$ für Cyan und der spektralen Verteilung des Reflektanzfaktors $R_\lambda$ zu jedem Wert von $\lambda$ geteilt durch 100 berechnet wird. In dem dargestellten Beispiel ergibt sich ein Wert für die Farbdichte D von 0,42.

Wie Fig. 5 (a) zeigt, wird das mindestens eine Farb-Messfeld rasterförmig an einer Vielzahl von Messpunkten vermessen. Dabei kann eine Auflösung von mindestens 30 dpi, vorzugsweise von mindestens 70, insbesondere von mindestens 90 dpi erreicht werden.

In Fig. 5 (b) zeigt dagegen die Situation, wie sie aus dem Stand der Technik bekannt ist. Der eingezeichnete Kreis 28 deutet den erfassten Bereich eines bekannten Farbdensitometers an, der mit seinem optischen System das Farb-Messfeld innerhalb des Kreises 28 mit einer spektralen Messkurve erfasst. Das Farb-Messfeld wurde also nicht nur weniger detailliert erfasst, sondern auch die Fläche des Farb-Messfeldes wurde nur unzureichend vermessen.

Dagegen ist es nach dem Verfahren nach Fig. 5 (a) möglich, die Fläche des Farb-Messfeldes im Wesentlichen ganz, also zu einem großen Prozentsatz von mindestens 80%, vorzugsweise zu mindestens 90%, insbesondere zu mindestens 95% zu vermessen.

Die nach dem beschriebenen Verfahren gemessenen Farbdichten aller Messpunkte innerhalb eines Farb-Messfeldes können in verschiedener Weise ausgewertet werden. Beispielsweise können die Farbdichten für mindestens zwei Messpunkte, vorzugsweise eine Mehrzahl von Messpunkten und insbesondere für alle Messpunkte jedes Farb-Messfeldes gemittelt werden. Somit können Mittelwerte für einzelne Gruppen von Messpunkten oder gar über alle Messpunkte berechnet werden.

Eine besonders bevorzugte Auswertung der Messpunkte erfolgt in Reihen von Messpunkten, die sich entlang der Druckrichtung erstrecken, also vorzugsweise inline aufgenommen worden sind und entlang der Erstreckung der Druckrichtung durch begrenzte Abschnitte des Druckkopfes ergeben. Somit kann beispielsweise jedem Messpunkt 26 der rasterförmigen spektralen Farbdichtemessung des mindestens einen Farb-Messfeldes 24 eine Gruppe von Farbdüsen eines Druckkopfes des Farbdruckers zugeordnet werden. Somit können Informationen zu den einzelnen Gruppen von Farbdüsen aus den spektralen Farbdichtemessungen abgeleitet werden, die eine Beurteilung der Funktionalität der Gruppen von Farbdüsen ermöglichen. Beispielsweise kann die Gruppe von Farbdüsen höchstens 10 Farbdüsen, vorzugsweise höchstens 5 Farbdüsen, insbesondere eine Farbdüse aufweisen.

Wenn anstelle eines digitalen Tintenstrahldruckers beispielsweise ein Rotationstiefdruck eingesetzt wird, wird das in jeder Der Druckfarben zu druckende Muster als Vertiefungen in die Walzenoberflächen eingebracht. Die Vertiefungen können bis zu 50 μm gering sind und man spricht auch von einer gestrichelten Walze. Beim Drucken der Farb-Messfelder können systematische Abweichungen in der Druckqualität auftreten, die bei einer integralen Messung des gesamten Farb-Messfeldes in den gemittelten spektralen Messwert eingehen. Bei der spektralen Vermessung in der zuvor beschriebenen Weise können Mittelwerte über alle Messpunkte berechnet und Messpunkte mit einer zu großen systematischen Abweichung vom Mittelwert bei der erneuten Berechnung des Mittelewerte der spektralen Information unberücksichtigt bleiben. Dadurch wird die Bestimmung der spektralen Information gegenüber einer Einzelmessung nach dem Stand der Technik verbessert.

**Patentansprüche**

1.　Verfahren zur spektralen Farbdichtemessung im Farbdruck,

　　　- bei dem für ein unbedrucktes Substrat mit einem ortsaufgelösten spektralen Messsystem, vorzugsweise an einer Vielzahl von Messpunkten, eine spektral aufgelöste Referenzreflektanz gemessen wird,

- bei dem mit einem Farbdrucker mindestens ein Farb-Messfeld, vorzugsweise eine Mehrzahl von Farb-Messfeldern, mit mindestens einer Druckfarbe gedruckt wird,
- bei dem die spektral aufgelöste Reflektanz für mindestens ein Farb-Messfeld mit dem ortsaufgelösten spektralen Messsystem an einer Vielzahl von Messpunkten gemessen wird,

-- wobei das mindestens eine Farb-Messfeld rasterförmig an einer Vielzahl von Messpunkten mit einer Auflösung von mindestens 30 dpi vermessen wird und

-- wobei die Fläche des mindestens einen Farb-Messfelds zu mindestens 80% vermessen wird,
und

- bei dem für jeden Messpunkt aus der spektralen Verteilung der gemessenen Reflektanz, der gemessenen Referenzreflektanz und einer die Druckfarbe repräsentierenden spektralen Gewichtsfunktion eine Farbdichte für die Druckfarbe berechnet wird.

**2.** Verfahren nach Anspruch 1,
bei dem das mindestens eine Farb-Messfeld rasterförmig an einer Vielzahl von Messpunkten mit einer Auflösung von mindestens 70 dpi vermessen wird.

**3.** Verfahren nach Anspruch 1 oder 2,
bei dem die Fläche des mindestens einen Farb-Messfelds zu mindestens 90% vermessen wird.

**4.** Verfahren nach einem der Ansprüche 1 bis 3,
bei dem die Farbdichten für mindestens zwei Messpunkte, vorzugsweise eine Mehrzahl von Messpunkten und insbesondere für alle Messpunkte jedes Farb-Messfeldes gemittelt werden.

**5.** Verfahren nach einem der Ansprüche 1 bis 4,

- bei dem jedem Messpunkt der rasterförmigen spektralen Farbdichtemessung des mindestens einen Farb-Messfeldes eine Gruppe von Farbdüsen eines Druckkopfes des Farbdruckers zugeordnet wird und
- bei dem die Gruppe von Farbdüsen höchstens 10 Farbdüsen aufweist.

**Claims**

**1.** Method for spectral colour density measurement in colour printing,

- in which a spectrally resolved reference reflectance is measured for an unprinted substrate using a spatially resolved spectral measurement system, preferably at a large number of measurement points,
- in which at least one colour measuring field, preferably a plurality of colour measuring fields, is printed with at least one printing ink using a colour printer,
- in which the spectrally resolved reflectance for at least one colour measurement field is measured with the spatially resolved spectral measurement system at a large number of measurement points,

- wherein the at least one colour measuring field is measured in a raster at a large number of measuring points with a resolution of at least 30 dpi and
- wherein at least 80% of the area of the at least one colour measurement field is measured,

and
- in which the colour density for the printing ink is calculated for each measuring point from the spectral distribution of the measured reflectance, the measured reference reflectance and a spectral weight function representing the printing ink.

**2.** Process according to claim 1,
in which the at least one colour measuring field is measured in a raster at a large number of measuring points with a resolution of at least 70 dpi, in particular at least 90 dpi.

**3.** Process according to claim 1 or 2,
in which at least 90% of the area of the at least one colour measurement field is measured.

**4.** Method according to any one of claims 1 to 3,
in which the colour densities are averaged for at least two measuring points, preferably a plurality of measuring points and in particular for all measuring points of each colour measuring field.

**5.** Method according to any one of claims 1 to 4,

- in which a group of ink nozzles of a print head of the colour printer is assigned to each measuring point of the raster-shaped spectral colour density measurement of the at least one colour measuring field, and
- in which the group of ink nozzles comprises at most 10 ink nozzles.

## Revendications

1. Procédé de mesure de la densité spectrale de couleurs dans une impression couleur,

   - dans lequel, pour un substrat non imprimé, une réflectance de référence à résolution spectrale est mesurée avec un système de mesure spectrale à résolution spatiale, de préférence au niveau d'une pluralité de points de mesure,
   - dans lequel au moins un champ de mesure de couleur, de préférence une pluralité de champs de mesure de couleur, est imprimé avec au moins une couleur d'impression au moyen d'une imprimante couleur,
   - dans lequel la réflectance à résolution spectrale est mesurée pour au moins un champ de mesure de couleur avec le système de mesure spectrale à résolution spatiale au niveau d'une pluralité de points de mesure,

      -- dans lequel l'au moins un champ de mesure de couleur est mesuré en forme de trame au niveau d'une pluralité de points de mesure avec une résolution d'au moins 30 dpi et
      -- dans lequel la surface d'au moins un champ de mesure de couleur est mesurée à au moins 80%,

   et
   - dans lequel, pour chaque point de mesure, une densité de couleur pour l'encre d'impression est calculée à partir de la répartition spectrale de la réflectance mesurée, de la réflectance de référence mesurée et d'une fonction de pondération spectrale représentant l'encre d'impression.

   - dans lequel un groupe de buses de couleur d'une tête d'impression de l'imprimante couleur est associé à chaque point de mesure de la mesure spectrale de densité de couleur en forme de trame de l'au moins un champ de mesure couleur, et
   - dans lequel le groupe de buses de couleur comprend au maximum 10 buses de couleur.

2. Procédé selon la revendication 1, dans lequel l'au moins un champ de mesure de couleur est mesuré en forme de trame au niveau d'une pluralité de points de mesure avec une résolution d'au moins 70 dpi.

3. Procédé selon la revendication 1 ou 2, dans lequel la surface de l'au moins un champ de mesure de couleur est mesurée à au moins 90%.

4. Procédé selon l'une quelconque des revendications 1 à 3, dans lequel les densités de couleur sont moyennées pour au moins deux points de mesure, de préférence une pluralité de points de mesure et en particulier pour tous les points de mesure de chaque champ de mesure de couleur.

5. Procédé selon l'une quelconque des revendications 1 à 4,

Fig.1

Fig.2

EP 4 195 645 B1

Fig.3

Fig.4

Fig.5

Reflektanz Farb-Messfeld (Cyan 75%)    Reflektanz Substrat    Reflexionsfaktor $R_\lambda$

Fig.6

Gewichtsfaktor $W_\lambda$

Reflexionsfaktor $R_\lambda$

$$D = -\log_{10} \cdot \sum_\lambda \frac{}{100} = 0{,}42$$

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009012815 A1
- US 20070002344 A1
- US 20020104457 A1